# EUROPÄISCHE PATENTSCHRIFT

(11) **EP 1 496 745 B1**
(45) Veröffentlichungstag und Bekanntmachung des Hinweises auf die Patenterteilung: **26.01.2011**
(21) Anmeldenummer: 03745692.8
(22) Anmeldetag: 07.04.2003
(51) Int. Cl.: A01N 47/24, A01N 37/50

(54) **VERFAHREN ZUR ERHÖHUNG DER WIDERSTANDSKRAFT VON PFLANZEN GEGEN DIE PHYTOTOXIZITÄT VON AGROCHEMIKALIEN**
METHOD FOR INCREASING THE RESISTANCE OF PLANTS TO THE PHYTOTOXICITY OF AGROCHEMICALS
PROCEDE POUR ACCROITRE LA RESISTANCE DE PLANTES A LA PHYTOTOXICITE DE PRODUITS CHIMIQUES AGRICOLES

(30) Priorität: 10.04.2002 DE 10215815
(43) Veröffentlichungstag der Anmeldung: 19.01.2005
(73) Patentinhaber: BASF SE, 67056 Ludwigshafen (DE)
(72) Erfinder: AMMERMANN, Eberhard, 64646 Heppenheim (DE); STIERL, Reinhard, 67251 Freinsheim (DE); LORENZ, Gisela, 67434 Neustadt (DE); STAMMLER, Gerd, 69221 Dossenheim (DE); SCHELBERGER, Klaus, 67161 Gönnheim (DE); SPADAFORA, James, Sugar Land, TX 77478 (US); ZAGAR, Cyrill, 68167 Mannheim (DE); WITSCHEL, Matthias, 67098 Bad Dürkheim (DE); WATANABE, Akihide, Ayase-shi, Kanagawa 252-1114 (JP); MOTOYOSHI, Masatoshi, Tojohashi-shi, Aichi (JP); KOJIMA, Kenichi, Yokohama-shi, Kanagawa (JP)
(86) Internationale Anmeldenummer: PCT/EP2003/003571
(87) Internationale Veröffentlichungsnummer: WO 2003/084331

(56) Entgegenhaltungen:
- EP-A- 0 094 348
- AQEL W. ABU-QARE; HARRY J. DUNCAN: "Herbicide safeners: uses, limitations, metabolism, and mechanisms of action" CHEMOSPHERE, Bd. 48, Nr. 9, Seiten 965-974, XP002246006
- BARNA BORDAS ET AL. : "Comparative Three-Dimensional Quantitative Structure-Activity Relationship Study of Safeners and Herbicides" J. AGRIC. FOOD CHEM. , Bd. 48, 2000, Seiten 926-931, XP002246007
- JOANNA DAVIES; JOHN C. CASELEY: "Herbicide safeners: a review" PESTICIDE SCIENCE, Bd. 55, 1999, Seiten 1043-1058, XP002246008

## Beschreibung

Die vorliegende Erfindung betrifft ein Verfahren zur Erhöhung der Widerstandskraft von Pflanzen gegen die Phytotoxizität von Agrochemikalien, welches dadurch gekennzeichnet ist, daß man die Pflanzen, den Boden oder Saatgüter mit einer wirksamen Menge einer Verbindung der Formel I 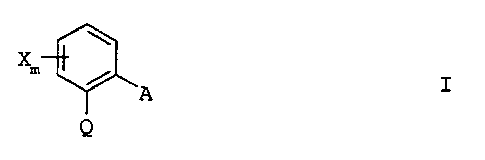 behandelt, worin
X Halogen, C₁-C₄-Alkyl oder Trifluormethyl;
m 0 oder 1;
Q C(=CH-CH₃)-COOCH₃, C(=CH-OCH₃)-COOCH₃, C(=N-OCH₃)-CONHCH₃, C(=N-OCH₃)-COOCH₃, N(-OCH₃)-COOCH₃ oder eine Gruppe Q1, 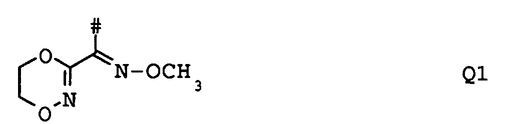 wobei # die Bindung zu dem Phenylring kennzeichnet;
A -O-B, -CH₂O-B, -OCH₂-B, -CH=CH-B, -C≡C-B, -CH₂O-N=C(R¹)-B oder -CH₂O-N=C (R¹) -C (R²)=N-OR³, wobei
B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkylamino, C₁-C₆-Alkylaminocarbonyl, Di-C₁-C₆-Alkylaminocarbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, C(=NOR')-OR" oder OC(R')₂-C(R")=NOR" wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₃-C₆-Cycloalkyl, C₁-C₆-Alkoxy, C₁-C₆-Halogen-alkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5-oder 6-gliedriges Heterocyclyl, 5- oder 6-gliedriges Hetaryl, 5- oder 6-gliedriges Hetaryloxy oder C(=NOR')-OR";
R' Wasserstoff, Cyano, C₁-C₆-Alkyl, C₃-C₆-Cycloalkyl oder C₁-C₄-Halogenalkyl;
R" Wasserstoff, C₁-C₆-Alkyl, C₃-C₆-Alkenyl, C₃-C₆-Alkinyl, C₁-C₄-Halogenalkyl, C₃-C₆-Halogenalkenyl oder C₃-C₆-Halogenalkinyl;
R¹ Wasserstoff, Cyano, C₁-C₄-Alkyl, C₁-C₄-Halogenalkyl, C₃-C₆-Cycloalkyl, C₁-C₄-Alkoxy;
R² Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a},
C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R')=NOR", wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy,
   C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
R³ Wasserstoff, C₁-C₆-Alkyl, C₂-C₆-Alkenyl, C₂-C₆-Alkinyl, wobei die Kohlenwasserstoffreste dieser Gruppen unsubstituiert oder substituiert sind durch einen bis drei Reste R^{c};
bedeuten, die von den Pflanzen oder Saatgütern aufgenommen wird.

Daneben berifft die Erfindung generell die Verwendung der Verbindungen der Formel I zur Erhöhung der Widerstandskraft von Pflanzen gegen die Phytotoxizität von Agrochemikalien.

Zu Agrochemikalien im Sinne dieser Erfindung zählen insbesondere Dünger oder herbizide, wachstumsregulierende, fungizide, insektizide oder nematizide Pflanzenschutzmittel.

Die Verträglichkeit von Kulturpflanzen gegenüber Agrochemikalien ist nicht immer völlig ausreichend, d.h. es werden neben der gewünschten wachstumsfördernden, herbiziden, wachstumsregulierenden, fungiziden, insektiziden oder nematiziden Wirkung fallweise auch die Kulturpflanzen in untolerierbar hohem Maße geschädigt. Eine andere unerwünschte Nebenwirkung von herbiziden, fungiziden, insektiziden oder nematiziden Pflanzenschutzmitteln kann eine wachstumshemmende Wirkung sein. Eine im allgemeinen erwünschte Verringerung der Aufwandmenge des Agrochemikalie hat den Nachteil, daß zwar die Kulturpflanze geschont, die gewünschte herbizide, fungizide, insektizide oder nematizide Wirkung jedoch nur unzureichend entfaltet wird.

Die Schadsymptome reichen dabei von morphologischen Veränderungen über eine Hemmung des Wachstums bis zum Absterben der Pflanzen (Phytotoxizität).

Wegen der Vielzahl der Ursachen der Schädigungen durch Agrochemikalien ist eine Bekämpfung solcher Schadsymptome außerordentlich schwierig; im Vordergrund stehen daher präventive Maßnahmen. Demzufolge ist die Erhöhung der Widerstandskraft von Pflanzen gegen die Phytotoxizität von Agrochemikalien ein wichtiges Anliegen in der Landwirtschaft.

Der vorliegenden Erfindung lag daher die Aufgabe zugrunde, ein Verfahren bereitzustellen, das breit anwendbar ist, die Pflanzen nicht schädigt und eine wirkungsvolle Erhöhung der Widerstandskraft der Pflanzen gegen die Phytotoxizität von Agrochemikalien bewirkt.

Demgemäß wurde das eingangs definierte Verfahren gefunden. Die verwendeten Wirkstoffe der Formel I sind als Fungizide und zum Teil auch als Insektizide bekannt (EP-A 178 826; EP-A 253 213; WO-A 93/15046; WO-A 95/18789; WO-A 95/21153; WO-A 95/21154; WO-A 95/24396; WO-A 96/01256; WO-A 97/15552; WO-A 97/27189). Einen Hinweis auf eine mögliche Wirkung dieser Wirkstoffe zur Erhöhung der Widerstandskraft von Pflanzen gegen die Phytotoxizität von Agrochemikalien gab es jedoch bisher nicht.

Wirkstoffe, die unerwünschte Nebenwirkungen anderer Agrochemikalien reduzieren, sind bekannt und werden üblicherweise als "Safener" bezeichnet siehe Z.B. EP0094348. Die Verwendung der Wirkstoffe der Formel I als Safener ist neu.

Die gute Pflanzenverträglichkeit der Wirkstoffe der Formel I in den zur Bekämpfung von Pflanzenkrankheiten notwendigen Konzentrationen erlaubt eine Behandlung von oberirdischen Pflanzenteilen, wie auch eine Behandlung von Pflanz- und Saatgut und des Bodens.

In dem erfindungsgemäßen Verfahren wird der Wirkstoff bevorzugt durch die Wurzeln von der Pflanze aufgenommen und im Pflanzensaft in der ganzen Pflanze verteilt.

Daher tritt die Wirkung nach Anwendung des erfindungsgemäßen Verfahrens nicht nur bei den Pflanzenteilen auf, die direkt besprüht wurden, sondern die Widerstandskraft der ganzen Pflanze gegen die Phytotoxizität von Agrochemikalien ist erhöht.

Bei einer bevorzugten Ausführungsform des Verfahrens werden die unterirdischen Pflanzenteile mit einer Formulierung des Wirkstoffs I behandelt.

In einer anderen bevorzugten Ausführungsform des Verfahrens wird das Saatgut mit einer Formulierung des Wirkstoffs I behandelt.

Die Herstellung der in dem erfindungsgemäßen Verfahren verwendeten Wirkstoffe ist aus den eingangs zitierten Schriften bekannt.

Für das erfindungsgemäße Verfahren werden Wirkstoffe mit den folgenden Bedeutungen der Substituenten, und zwar jeweils für sich allein oder in Kombination, besonders bevorzugt:

Für das erfindungsgemäße Verfahren werden insbesondere die Wirkstoffe der Formeln II bis VIII besonders bevorzugt, in denen V OCH₃ oder NHCH₃ und Y CH oder N bedeuten.

Bevorzugte Wirkstoffe der Formel I, in denen Q für C(=N-OCH₃)-COOCH₃ steht, sind die in den Schriften EP-A 253 213 und EP-A 254 426 beschriebenen Verbindungen.

Bevorzugte Wirkstoffe der Formel I, in denen Q für C(=N-OCH₃)-CONHCH₃ steht, sind die in den Schriften EP-A 398 692, EP-A 477 631 und EP-A 628 540 beschriebenen Verbindungen.

Bevorzugte Wirkstoffe der Formel I, in denen Q für N(-OCH₃)-COOCH₃ steht, sind die in den Schriften WO-A 93/15046 und WO-A 96/01256 beschriebenen Verbindungen.

Bevorzugte Wirkstoffe der Formel I, in denen Q für C(=CH-OCH₃)-COOCH₃ steht, sind die in den Schriften EP-A 178 826 und EP-A 278 595 beschriebenen Verbindungen.

Bevorzugte Wirkstoffe der Formel I, in denen Q für C(=CH-CH₃)-COOCH₃ steht, sind die in den Schriften EP-A 280 185 und EP-A 350 691 beschriebenen Verbindungen.

Bevorzugte Wirkstoffe der Formel I, in denen Q für eine Gruppe Q1 steht, sind die in WO-A 97/27189 beschriebenen Verbindungen.

Bevorzugte Wirkstoffe der Formel I, in denen A für -CH₂O-N=C(R¹)-B steht, sind die in den Schriften EP-A 460 575 und EP-A 463 488 beschriebenen Verbindungen.

Bevorzugte Wirkstoffe der Formel I, in denen A für -O-B steht, sind die in den Schriften EP-A 382 375 und EP-A 398 692 beschriebenen Verbindungen.

Bevorzugte Wirkstoffe der Formel I, in denen A für -CH₂O-N=C(R¹)-C(R²)=N-OR³ steht, sind die in den Schriften WO-A 95/18789, WO-A 95/21153, WO-A 95/21154, WO-A 97/05103, WO-A 97/06133 und WO-A 97/15552 beschriebenen Verbindungen.

Bevorzugt werden ebenfalls wirkstoffe der formel I,
wobei der Index m Null bedeutet und die Substituenten in Formel I folgende Bedeutung haben:
A -O-B, -CH₂O-B, -CH₂O-N=C(R¹)-B oder CH₂-O-N=C (R¹) -C (R²) =N-OR³;
B Phenyl, Pyridyl, Pyrimidinyl, Pyrazolyl, Triazolyl, wobei diese Ringsysteme substituiert sind durch einen oder zwei Reste R^{a};

Besonders bevorzugt werden Wirkstoffe der Formel I, in denen
Q für C(=N-OCH₃)-COOCH₃ oder C(=N-OCH₃)-CONHCH₃;
A für CH₂-O und
B für -N=C(R¹)-C(R²)=N-OR³ steht, wobei
R¹ Wasserstoff, Cyano, Cyclopropyl, C₁-C₄-Alkyl oder C₁-C₂-Halogenalkyl, insbesondere Methyl, Ethyl, 1-Methylethyl oder Trifluormethyl und
R² C₁-C₄-Alkyl, C₂-C₅-Alkenyl, durch ein oder zwei Halogenatome substituiertes Phenyl oder C(R')=NOR", wobei
R' eine der vorstehend bei R¹ genannten Gruppen und
R" Wasserstoff, Cyclopropyl, C₁-C₄-Alkyl bedeuten, insbesondere Methyl, Ethyl oder iso-Propyl, und
R³ eine der bei R" genannten Gruppen bedeutet;
diese Wirkstoffe werden durch die Formel II beschrieben, 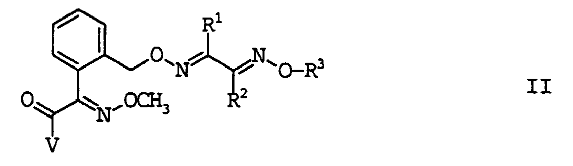 in der die Variablen die vorstehend genannten Bedeutungen haben.

Insbesondere werden Wirkstoffe der Formel IIA bevorzugt. 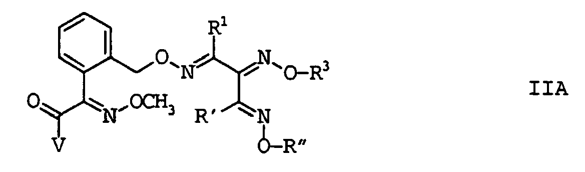 in der die Variablen die vorstehend genannten Bedeutungen haben.

Daneben werden auch Verbindungen der Formel III a bevorzugt, in der T für CH oder N und R^{a}' und R^{b} Halogen oder C₁-C₄-Alkyl bedeuten und x für 0, 1 oder 2 und y für 0 oder 1 stehen.

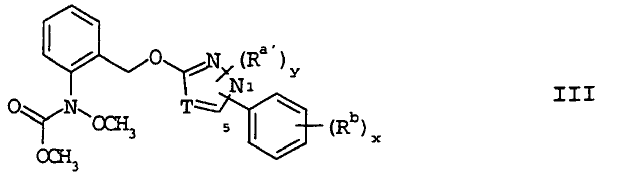

Besonders bevorzugt werden wirkstoffe der Formel III, in der T für CH oder N und R^{a}' und R^{b} Halogen oder C₁-C₄-Alkyl bedeuten, die Phenylgruppe in 1- oder 5-Stellung steht und x für 0, 1 oder 2 und y für 0 oder 1 stehen.

Im Hinblick auf ihre Verwendung als Safener sind die in den folgenden Tabellen zusammengestellten Wirkstoffe besonders bevorzugt.

**Tabelle I**

| | | | | | |
|---|---|---|---|---|---|
| 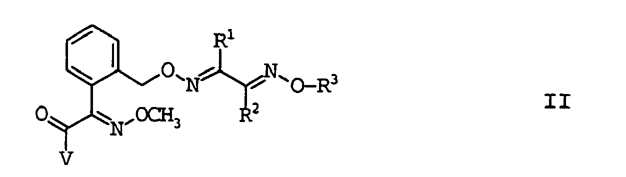 | | | | | |

| **Nr.** | **V** | **R¹** | **R²** | **R³** | **Literatur** |
|---|---|---|---|---|---|
| I-1 | OCH₃ | CH3 | CH₃ | CH3 | WO-A 95/18789 |
| I-2 | OCH₃ | CH₃ | CH(CH₃)₂ | CH3 | WO-A 95/18789 |
| I-3 | OCH₃ | CH₃ | CH₂CH₃ | CH₃ | WO-A 95/18789 |
| I-4 | NHCH₃ | CH₃ | CH₃ | CH₃ | WO-A 95/18789 |
| I-5 | NHCH₃ | CH3 | 4-F-C₆H₄ | CH₃ | WO-A 95/18789 |
| I-6 | NHCH₃ | CH3 | 4-Cl-C₆H₄ | CH₃ | WO-A 95/18789 |
| I-7 | NHCH₃ | CH3 | 2,4-C₆H₃ | CH₃ | WO-A 95/18789 |
| I-8 | NHCH₃ | Cl | 4-F-C₆H₄ | CH₃ | WO-A 98/38857 |
| I-9 | NHCH₃ | Cl | 4-Cl-C₆H₄ | CH₂CH₃ | WO-A 98/38857 |
| I-10 | NHCH₃ | CH₃ | CH₂C (=CH₂) CH₃ | CH₃ | WO-A 97/05103 |
| I-11 | NHCH₃ | CH₃ | CH=C(CH₃)₂ | CH₃ | WO-A 97/05103 |
| I-12 | NHCH₃ | CH₃ | CH=C(CH₃)₂ | CH₂CH₃ | WO-A 97/05103 |
| I-13 | NHCH₃ | CH₃ | CH=C (CH₃) CH₂CH₃ | CH3 | WO-A 97/05103 |
| I-14 | NHCH₃ | CH₃ | O-CH(CH₃)₂ | CH3 | WO-A 97/06133 |
| I-15 | NHCH₃ | CH₃ | O-CH₂CH (CH₃) ₂ | CH3 | WO-A 97/06133 |
| I-16 | NHCH₃ | CH₃ | C(CH₃)=NOCH₃ | CH₃ | WO-A 97/15552 |
| I-17 | NHCH₃ | CH₃ | C(CH₃)=NOCH₂CH₃ | CH₂CH₃ | WO-A 97/15552 |
| I-18 | NHCH₃ | CH₃ | C(CH₃)=NOCH(CH₃)₂ | CH (CH₃) ₂ | WO-A 97/15552 |
| I-19 | NHCH₃ | CH₃ | C (CH₃) =NO (C-C₃H₅) | C-C₃H₅ | WO-A 97/15552 |
| I-20 | NHCH₃ | CH₃ | C(CH₃)=NOCH₂CH=CH₂ | CH₂CH=CH₂ | WO-A 97/15552 |
| I-21 | NHCH₃ | CF₃ | C(CF₃)=NOCH₃ | CH₃ | WO-A 97/15552 |
| I-22 | NHCH₃ | CF₃ | C (CF₃) =NOCH₂CH₃ | CH₂CH₃ | WO-A 97/15552 |
| I-23 | NHCH₃ | CF₃ | C(CF₃)=NOCH(CH₃)₂ | CH (CH₃) ₂ | WO-A 97/15552 |
| I-24 | NHCH₃ | CF₃ | C (CF₃ ) =NO (c-C₃H₅) | c-C₃H₅ | WO-A 97/15552 |
| I-25 | NHCH₃ | CF₃ | C(CF₃)=NOCH₂CH=CH₂ | CH₂CH=CH₂ | WO-A 97/15552 |
| I-26 | OCH₃ | CH₃ | C (CH₃) =NOCH₃ | CH3 | WO-A 97/15552 |
| I-27 | OCH₃ | CH₃ | C (CH₃) =NOCH₂CH₃ | CH₂CH₃ | WO-A 97/15552 |
| I-28 | OCH₃ | CH₃ | C (CH₃) =NOCH (CH₃) ₂ | CH(CH₃)₂ | WO-A 97/15552 |
| I-29 | OCH₃ | CH₃ | C (CH₃) =NO (C-C₃H₅) | c-C₃H₅ | WO-A 97/15552 |
| I-30 | OCH₃ | CH₃ | C(CH₃)=NOCH₂CH=CH₂ | CH₂CH=CH₂ | WO-A 97/15552 |
| I-31 | OCH₃ | CF₃ | C (CF₃) =NOCH₃ | CH₃ | WO-A 97/15552 |
| I-32 | OCH₃ | CF₃ | C (CF₃) =NOCH₂CH₃ | CH₂CH₃ | WO-A 97/15552 |
| I-33 | OCH₃ | CF₃ | C (CF₃) =NOCH (CH₃) ₂ | CH (CH₃) ₂ | WO-A 97/15552 |
| I-34 | OCH₃ | CF3 | C (CF₃) =NO (c-C₃H₅) | C-C₃H₅ | WO-A 97/15552 |
| I-35 | OCH₃ | CF₃ | C (CF₃) =NOCH₂CH=CH₂ | CH₂CH=CH₂ | WO-A 97/15552 |

**Tabelle II**

| | | | | | |
|---|---|---|---|---|---|
| 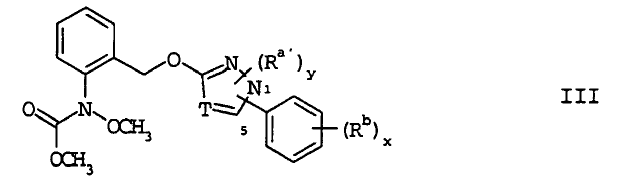 | | | | | |

| **Nr.** | **T** | **(R^{a}')_{y}** | **Position der Gruppe Phenyl-(R^{b})ₓ** | **(R^{b})ₓ** | **Literatur** |
|---|---|---|---|---|---|
| II-1 | N | - | 1 | 2,4-Cl₂ | WO-A 96/01256 |
| II-2 | N | - | 1 | 4-Cl | WO-A 96/01256 |
| II-3 | CH | - | 1 | 2-Cl | WO-A 96/01256 |
| II-4 | CH | - | 1 | 3-Cl | WO-A 96/01256 |
| II-5 | CH | - | 1 | 4-Cl | WO-A 96/01256 |
| II-6 | CH | - | 1 | 4-CH₃ | WO-A 96/01256 |
| II-7 | CH | - | 1 | H | WO-A 96/01256 |
| II-8 | CH | - | 1 | 3-CH₃ | WO-A 96/01256 |
| II-9 | CH | 5-CH₃ | 1 | 3 -CF₃ | WO-A 96/01256 |
| II-10 | CH | 1-CH₃ | 5 | 3-CF₃ | WO-A 99/33812 |
| II-11 | CH | 1-CH₃ | 5 | 4-Cl | WO-A 99/33812 |
| II-12 | CH | 1-CH₃ | 5 | - | WO-A 99/33812 |

**Tabelle III**

| | | | | | |
|---|---|---|---|---|---|
| 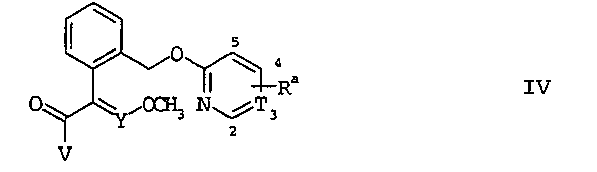 | | | | | |

| **Nr.** | **V** | **Y** | **T** | **R^{a}** | **Literatur** |
|---|---|---|---|---|---|
| III-1 | OCH₃ | CH | N | 2-OCH₃, 4-CF₃ | WO-A 96/16047 |
| III-2 | OCH₃ | CH | N | 2-OCH (CH₃) ₂, 4-CF₃ | WO-A 96/16047 |
| III-3 | OCH₃ | CH | CH | 2-CF₃ | EP-A 278 595 |
| III-4 | OCH₃ | CH | CH | 3-CF₃ | EP-A 278 595 |
| III-5 | NHCH₃ | N | CH | 3-Cl | EP-A 398 692 |
| III-6 | NHCH₃ | N | CH | 3-CF₃ | EP-A 398 692 |
| III-7 | NHCH₃ | N | CH | 3-CF3_{,} 5-Cl | EP-A 398 692 |
| III-8 | NHCH₃ | N | CH | 3-Cl, 5-CF₃ | EP-A 398 692 |

**Tabelle IV**

| | | | | | |
|---|---|---|---|---|---|
| 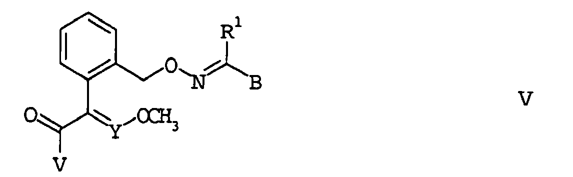 | | | | | |

| **Nr.** | **V** | **Y** | **R¹** | **B** | **Literatur** |
|---|---|---|---|---|---|
| IV-1 | OCH₃ | CH | CH₃ | (3-CF₃) C₆H₄ | EP-A 370 629 |
| IV-2 | OCH₃ | CH | CH₃ | (3, 5-Cl₂) C₆H₃ | EP-A 370 629 |
| IV-3 | NHCH₃ | N | CH₃ | (3-CF₃) C₆H₄ | WO-A 92/13830 |
| IV-4 | NHCH₃ | N | CH₃ | (3-OCF₃)C₆H₄ | WO-A 92/13830 |
| IV-5 | OCH₃ | N | CH₃ | (3-OCF₃) C₆H₄ | EP-A 460 575 |
| IV-6 | OCH₃ | N | CH₃ | (3-CF₃)C₆H₄ | EP-A 460 575 |
| IV-7 | OCH₃ | N | CH₃ | (3,4-Cl₂)C₆H₃ | EP-A 460 575 |
| IV-8 | OCH₃ | N | CH₃ | (3, 5-Cl₂) C₆H₃ | EP-A 463 488 |

**Tabelle V**

| | | | | |
|---|---|---|---|---|
| 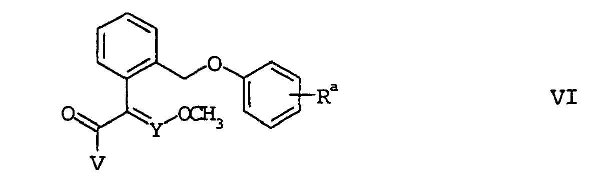 | | | | |

| **Nr.** | **V** | **Y** | **R^{a}** | **Literatur** |
|---|---|---|---|---|
| V-1 | OCH₃ | N | 2-CH₃ | EP-A 253 213 |
| V-2 | OCH₃ | N | 2,5-(CH₃)₂ | EP-A 253 213 |
| V-3 | NHCH₃ | N | 2,5-(CH₃)₂ | EP-A 477 631 |
| V-4 | NHCH₃ | N | 2-Cl | EP-A 477 631 |
| V-5 | NHCH₃ | N | 2 -CH₃ | EP-A 477 631 |
| V-6 | NHCH₃ | N | 2-CH₃, 4-OCF₃ | EP-A 628 540 |
| V-7 | NHCH₃ | N | 2-Cl, 4-OCF₃ | EP-A 628 540 |
| V-8 | NHCH₃ | N | 2-CH₃, 4-OCH(CH₃)-C(CH₃)=NOCH₃ | EP-A 11 18 609 |
| V-9 | NHCH₃ | N | 2-Cl, 4-OCH(CH₃)-C(CH₃)=NOCH₃ | EP-A 11 18 609 |
| V-10 | NHCH₃ | N | 2-CH₃, 4-OCH (CH₃) -C (CH₂CH₃) =NOCH₃ | EP-A 11 18 609 |
| V-11 | NHCH₃ | N | 2-Cl,4-OCH(CH₃)-C(CH₃)=NOCH₂CH₃ | EP-A 11 18 609 |

**Tabelle VI**

| | | | | |
|---|---|---|---|---|
| 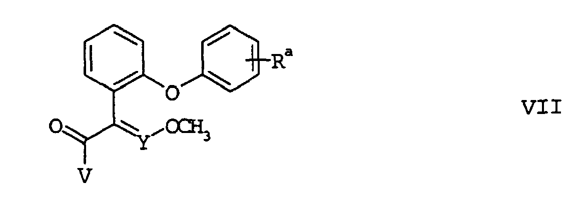 | | | | |

| **Nr.** | **V** | **Y** | **R^{a}** | **Literatur** |
|---|---|---|---|---|
| VI-1 | NHCH₃ | N | H | EP-A 398 692 |
| VI-2 | NHCH₃ | N | 3-CH₃ | EP-A 398 692 |
| VI-3 | NHCH₃ | N | 2-NO₂ | EP-A 398 692 |
| VI-4 | NHCH₃ | N | 4-NO₂ | EP-A 398 692 |
| VI-5 | NHCH₃ | N | 4-Cl | EP-A 398 692 |
| VI-6 | NHCH₃ | N | 4-Br | EP-A 398 692 |

**Tabelle VII**

| | | | |
|---|---|---|---|
| 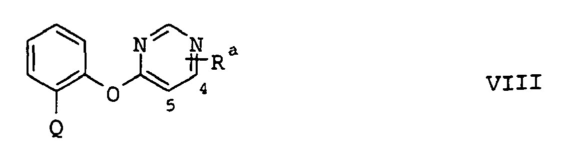 | | | |

| **Nr.** | **Q** | **R^{a}** | **Literatur** |
|---|---|---|---|
| VII-1 | C(=CH-OCH₃)COOCH₃ | 4-O-(2-CN-C₆H₄) | EP-A 382 375 |
| VII-2 | C(=CH-OCH₃)COOCH₃ | 4-O-(2-Cl-C₆H₄) | EP-A 382 375 |
| VII-3 | C(=CH-OCH₃)COOCH₃ | 4-O- (2-CH₃-C₆H₄) | EP-A 382 375 |
| VII-4 | C (=N-OCH₃) CONHCH₃ | 4-O- (2-Cl-C₆H₄) | GB-A 2253624 |
| VII-5 | C(=N-OCH₃)CONHCH₃ | 4-O-(2,4-Cl₂-C₆H₃) | GB-A 2253624 |
| VII-6 | C (=N-OCH₃) CONHCH₃ | 4-O- (2-CH₃-C₆H₄) | GB-A 2253624 |
| VII-7 | C (=N-OCH₃) CONHCH₃ | 4-O- (2-CH₃, 3-Cl-C₆H₃) | GB-A 2253624 |
| VII-8 | C(=N-OCH₃)CONHCH₃ | 4-O- (2-CH₃-C₆H₄) , 5-F | WO-A 98/21189 |
| VII-9 | C (=N-OCH₃) CONHCH₃ | 4-O- (2-Cl-C₆H₄), 5-F | WO-A 98/21189 |
| VII-10 | C(=N-OCH₃)CONHCH₃ | 4-O- (2-CH₃,3-Cl-C₆H₃), 5-F | WO-A 98/21189 |
| VII-11 | C (=N-OCH₃) CONHCH₃ | 4-O- (2-Cl,3-CH₃-C₆H₃), 5-F | WO-A 98/21189 |
| VII-12 | Q1 | 4-O- (2-Cl-C₆H₄), 5-F | WO-A 97/27189 |
| VII-13 | Q1 | 4-O- (2-CH₃,3-Cl-C₆H₃), 5-F | WO-A 97/27189 |
| VII-14 | Q1 | 4-O- (2-Cl,3-CH₃-C₆H₃), 5-F | WO-A 97/27189 |

Die Verbindungen I erhöhen die Widerstandskraft der Pflanze gegen die Phytotoxizität von Agrochemikalien. Besondere Bedeutung haben sie für die Behandlung verschiedener Kulturpflanzen wie Weizen, Gerste, Roggen, Hafer, Reis, Golfrasen, Mais, Bananen, Baumwolle, Soja, Kaffee, Weinreben, Obst- und Zierpflanzen, und Gemüsepflanzen wie Gurken, Bohnen, Tomaten, Kartoffeln und Kürbisgewächse, sowie an den Samen dieser Pflanzen, insbesondere Weizen, Gerste, Roggen, Hafer, Mais und Reis.

Speziell eignen sie sich zur Bekämpfung folgender Schadbilder:
- Einkürzung der Wuchshöhe von Reis, Getreide oder Tomaten,
- Bildung von Nekrosen an dikotylen Kulturen wie Gurken oder Weinreben,
- Deformation der Blätter von Weizen, Gurken oder Tomaten,
- Verfärbungen des grünen Blattgewebes wie z. B. Ausbleichen von Gerste oder Soja,
- Welkeerscheinungen trotz ausreichendem Nährstoffangebot.

Die Verbindungen I werden angewendet, indem man die zu schützenden Pflanzen, Saatgüter oder den Erdboden mit einer wirksamen Menge der Wirkstoffe behandelt. Die Anwendung kann sowohl vor als auch nach der Applikation der phytotoxischen Agrochemikalie auf die Pflanzen oder Samen erfolgen.

In einer bevorzugten Ausführungsform des Verfahrens erfolgt die Behandlung der Pflanze gemeinsam mit der Applikation der anderen (phytotoxischen) Agrochemikalie. Es ist eine deutlich reduzierte Anfälligkeit der Pflanze gegen die Phytotoxizität der anderen Agrochemikalie zu verzeichnen.

Als Agrochemikalien sind im Wesentlichen die im Internet unter http://www.hclrss.demon.co.uk/index_cn_frame.html (Index der common names) aufgelisteten herbiziden, akariziden, insektiziden, nematiziden und fungiziden Substanzen zu verstehen. Insbesondere werden die Wirkstoffe der Formel I mit herbiziden, akariziden, insektiziden, nematiziden oder fungiziden Agrochemikalien angewandt, die aus der nachstehenden Liste ausgewählt sind:
Abamectin; acephate; acequinocyl; acetamiprid; acethion; acetochlor; acetoprole; acifluorfen; aclonifen; ACN; acrinathrin; acrolein; acrylonitrile; acypetacs; alachlor; alanap; alanycarb; aldicarb; aldimorph; aldoxycarb; aldrin; allethrin; d-trans-allethrin; allidochlor; allosamidin; alloxydim; allyl alcohol; allyxycarb; alorac; alpha-cypermethrin; ametridione; ametryn; ametryne; amibuzin; amicarbazone; amidithion; amidoflumet; amidosulfuron; aminocarb; aminotriazole; amiprofos-methyl; amiton; amitraz; amitrole; ammonium sulfamate; ampropylfos; AMS; anabasine; anilazine; anilofos; anisuron; arprocarb; arsenous oxide; asulam; athidathion; atraton; atrazine; aureofungin; avermectin B1; azaconazole; azadirachtin; azafenidin; azamethiphos; azidithion; azimsulfuron; azinphos-ethyl (= azinphosethyl); azinphos-methyl (= azinphosmethyl); aziprotryn (= aziprotryne); azithiram; azobenzene; azocyclotin; azothoate; barban (= barbanate); barium hexafluorosilicate; barium polysulfide; barium silicofluoride; barthrin; BCPC; beflubutamid; benalaxyl; benazolin; bendiocarb; bendioxide; benefin (= benfluralin); benfuracarb; benfuresate; benodanil; benomyl; benoxafos; benquinox; bensulfuron; bensulide; bensultap; bentaluron; bentazon (= bentazone); benthiocarb; benzadox; benzalkonium chloride; benzamacril; benzamizole; benzamorf; benzene hexachloride; benzfendizone; benzipram; benzobicyclon; benzoepin; benzofenap; benzofluor; benzohydroxamic acid; benzomate benzoximate (= benzoylprop); benzthiazuron; benzyl benzoate; beta-cyfluthrin; beta-cypermethrin; bethoxazin; BHC; gamma-BHC; bialaphos; bifenazate; bifenox; bifenthrin; bilanafos; binapacryl; bioallethrin; bioethanomethrin; biopermethrin; bioresmethrin; biphenyl; bispyribac; bistrifluron; bitertanol; bithionol; blasticidin-S; borax; Bordeaux mixture; BPPS; bromacil; bromchlophos; bromfenvinfos; bromobonil; bromobutide; bromocyclen; bromo-DDT; bromofenoxim; bromomethane; bromophos; bromophos-ethyl; bromopropylate; bromoxynil; brompyrazon; bromuconazole; BRP; bufencarb; bupirimate; buprofezin; Burgundy mixture;
butacarb; butachlor; butafenacil; butam; butamifos; butathiofos;
butenachlor; buthidazole; buthiobate; buthiuron; butocarboxim;
butonate; butoxycarboxim; butralin; butroxydim; buturon; butylamine; butylate; butylchlorophos; cacodylic acid; cadusafos; cafenstrole; calcium arsenate; calcium chlorate; calcium cyanamide;
calcium polysulfide; cambendichlor; camphechlor; captafol; captan; carbam; carbamorph; carbanolate; carbaryl; carbasulam; carbathion; carbendazim; carbetamide; carbofuran; carbon disulfide;
carbon tetrachloride; carbophenothion; carbophos; carbosulfan;
carboxazole; carboxin; carfentrazone; carpropamid; cartap; carvone; CDAA; CDEA; CDEC; CEPC; cerenox; cevadilla; Cheshunt mixture; chinalphos; chinalphos-méthyl; chinomethionat; chlobenthiazone; chlomethoxyfen; chlor-IPC; chloramben; chloraniformethan;
chloranil; chloranocryl; chlorazifop; chlorazine; chlorbenside;
chlorbicyclen; chlorbromuron; chlorbufam; chlordane; chlordecone;
chlordimeform; chlorethoxyfos; chloreturon; chlorfenac; chlorfenapyr; chlorfenazole; chlorfenethol; chlorfenidim; chlorfénizon;
chlorfenprop; chlorfenson; chlorfensulphide; chlorfenvinphos;
chlorfenvinphos-methyl; chlorfluazuron; chlorflurazole; chlorflurecol; chlorflurenol; chloridazon; chlorimuron; chlorinate;
chlormephos; chlormethoxynil; chlornitrofen; chloroacetic acid;
chlorobenzilate; chloroform; chloromebuform; chloromethiuron;
chloroneb; chlorophos; chloropicrin; chloropon; chloropropylate;
chlorothalonil; chlorotoluron; chloroxifenidim (= chloroxuron);
chloroxynil; chlorphoxim; chlorprazophos; chlorprocarb; chlorpropham; chlorpyrifos; chlorpyrifos-methyl; chlorquinox; chlorsulfuron; chlorthal; chlorthiamid; chlorthiophos; chlortoluron; chlozolinate; chromafenozide; cinidon-ethyl; cinerin I; cinerin II;
cinmethylin; cinosulfuron; cisanilide; cismethrin; clethodim;
climbazole; cliodinate; clodinafop; cloethocarb; clofentezine;
clofop; clomazone; clomeprop; cloprop; cloproxydim; clopyralid;
cloransulam; closantel; clothianidin; clotrimazole; CMA; CMMP;
CMP; CMU; copper acetate; copper acetoarsenite; copper arsenate;
copper carbonate, basic; copper hydroxide; copper naphthenate;
copper oleate; copper oxychloride; copper 8-quinolinolate; copper silicate; copper sulfate; copper sulfate, basic; copper zinc chromate; coumaphos; coumithoate; 4-CPA; 4-CPB; CPMF; 4-CPP;
CPPC; cresol (= cresylic acid); crotamiton; crotoxyfos (= crotoxyphos); crufomate; cryolite; cufraneb; cumyluron; cuprobam; cuprous oxide; CVMP; cyanatryn; cyanazine; cyanofenphos; cyanophos;
cyanthoate; cyazofamid; cyclafuramid; cyclethrin; cycloate; cycloheximide; cycloprothrin; cyclosulfamuron; cycloxydim; cyflufenamid; cycluron; cyfluthrin; beta-cyfluthrin; cyhalofop; cyhalothrin; gamma-cyhalothrin; lambda-cyhalothrin; cyhexatin; cymoxanil; cypendazole; cypermethrin; alpha-cypermethrin; beta-cypermethrin; theta-cypermethrin; zeta-cypermethrin; cyperquat; cyphenothrin; cyprazine; cyprazole; cyprex; cyproconazole; cyprodinil; cyprofuram; cypromid; cyromazine; cythioate; 2,4-D; 3,4-DA; daimuron; dalapon; dazomet; 2,4-DB; 3,4-DB; DBCP; DCB; DCIP; DCPA (USA); DCPA (Japan); DCU; DDD; DDPP; DDT; pp (pure)-DDT; DDVP; 2,4-DEB; debacarb; decafentin; decarbofuran; dehydroacetic acid; deiquat; delachlor; delnav; deltamethrin; demephion; demephion-O; demephion-S; demeton; demeton-methyl; demeton-O; demeton-O-methyl; demeton-S; demeton-S-methyl; demeton-S-methylsulphon (= demeton-S-methyl sulphone); DEP; 2,4-DEP; depalléthrine; derris; 2,4-DES; desmedipham; desmetryn (= desmetryne); diafenthiuron; dialifor (= dialifos); di-allate (= diallate); diamidafos; dianat; diazinon; dibrom; 1,2-dibromoethane; dicamba; dicapthon; dichlobenil; dichlofenthion; dichlofluanid; dichlone; dichloralurea; dichlorfenidim; dichlormate; o-dichlorobenzene (= orthodichlorobenzene); p-dichlorobenzene (= para-dichlorobenzene); 1,2-dichloroethane; dichloromethane; dichlorophen; 1,2-dichloropropane; 1,3-dichloropropene; dichlorprop; dichlorprop-P; dichlorvos; dichlozoline; diclobutrazol; diclocymet; diclofop; diclomezine; dicloran; diclosulam; dicofol; dicresyl; dicrotophos; dicryl; dicyclanil; dieldrin; dienochlor; diethamquat; diethatyl; diethion (= diethion); diethofencarb; diethyl pyrocarbonate; difenoconazole; difenopenten; difenoxuron; difenzoquat; diflubenzuron; diflufenican (= diflufenicanil); diflufenzopyr; diflumetorim; dilor; dimefox; dimefuron; dimehypo; dimepiperate; dimetan; dimethachlor; dimethametryn; dimethenamid; dimethenamid-P; dimethirimol; dimethoate; dimethomorph; dimethrin; dimethylvinphos; dimetilan; dimexano; dimidazon; dimpylate; dinex; diniconazole; diniconazole-M; dinitramine; dinobuton; dinocap; dinocap-4; dinocap-6; dinocton; dinofenate; dinopenton; dinoprop; dinosam; dinoseb; dinosulfon; dinotefuran; dinoterb; dinoterbon; diofenolan; dioxabenzofos; dioxacarb; dioxathion; diphenamid; diphenyl sulfone; diphenylamine; diphenylsulphide; dipropetryn; dipterex; dipyrithione; diquat; disugran; disul; disulfiram; disulfoton; ditalimfos; dithianon; dithicrofos; dithiométon; dithiopyr; diuron; dixanthogen; DMPA; DNOC; dodemorph; dodicin; dodine; dofenapyn; doguadine; doramectin (= 2,4-DP); 3,4-DP; DPC; drazoxolon; DSMA; d-trans-allethrin; dymron; EBEP; α-ecdysone (= α-ecdysone; ecdysterone); echlomezol; EDB; EDC; EDDP (= edifenphos); eglinazine; emamectin; EMPC; empenthrin; endosulfan; endothal (= endothall); endothion; endrin; ephirsulfonate; EPN; epofenonane; epoxiconazole; eprinomectin; epronaz; EPTC; erbon; esfenvalerate; ESP; esprocarb; etaconazole; etaphos; etem; ethaboxam; ethalfluralin; ethametsulfuron; ethidimuron; ethiofencarb; ethiolate; ethion; ethiprole; ethirimol; ethoate-methyl; ethofumesate; ethoprop (= ethoprophos); ethoxyfen; ethoxyquin; ethoxysulfuron; ethyl pyrophosphate; ethylan (= ethyl-DDD); ethylene dibromide; ethylene dichloride; ethylene oxide; ethyl formate; ethylmercury acetate; ethylmercury bromide; ethylmercury chloride; ethylmercury phosphate; etinofen; ETM; etnipromid; etobenzanid; etofenprox; etoxazole; etridiazole; etrimfos; EXD; famoxadone; famphur; fenac; fenamidone; fenaminosulf; fenamiphos; fenapanil; fenarimol; fenasulam; fenazaflor; fenazaquin; fenbuconazole; fenbutatin oxide; fenchlorphos; fenethacarb; fenfluthrin; fenfuram; fenhexamid; fenidin; fenitropan; fenitrothion; fénizon; fenobucarb; fenolovo; fenoprop; fenothiocarb; fenoxacrim; fenoxanil; fenoxaprop; fenoxaprop-P; fenoxycarb; fenpiclonil; fenpirithrin; fenpropathrin; fenpropidin; fenpropimorph; fenpyroximate; fenridazon; fenson; fensulfothion; fenteracol; fenthiaprop; fenthion; fenthion-ethyl; fentiaprop; fentin; fentrazamide; fentrifanil; fenuron; fenvalerate; ferbam; ferimzone; ferrous sulfate; fipronil; flamprop; flamprop-M; flazasulfuron; flonicamid; florasulam; fluacrypyrim; fluazifop; fluazifop-P; fluazinam; fluazolate; fluazuron; flubenzimine; flucarbazone; fluchloralin; flucofuron; flucycloxuron; flucythrinate; fludioxonil; fluenetil; flufenacet; flufenerim; flufenican; flufenoxuron; flufenprox; flufenpyr; flumethrin; flumetover; flumetsulam; flumezin; flumiclorac; flumioxazin; flumipropyn; fluometuron; fluorbenside; fluoridamid; fluorochloridone; fluorodifen; fluoroglycofen; fluoroimide; fluoromidine; fluoronitrofen; fluothiuron; fluotrimazole; flupoxam; flupropacil; flupropanate; flupyrsulfuron; fluquinconazole; fluridone; flurochloridone; fluromidine; fluroxypyr; flurtamone; flusilazole; flusulfamide; fluthiacet; flutolanil; flutriafol; fluvalinate; tau-fluvalinate; folpel (= folpet); fomesafen; fonofos; foramsulfuron; formaldehyde; formetanate; formothion; formparanate; fosamine; fosetyl; fosmethilan; fospirate; fosthiazate; fosthietan; fthalide; fuberidazole; furalaxyl; furametpyr; furathiocarb; furcarbanil; furconazole; furconazole-cis; furethrin; furmecyclox; furophanate; furyloxyfen; gamma-BHC; gamma-cyhalothrin; gamma-HCH; glufosinate; glyodin; glyphosate; griseofulvin; guanoctine (= guazatine); halacrinate; halfenprox; halofenozide; halosafen; halosulfuron; haloxydine; haloxyfop; HCA; HCH; gamma-HCH; HEOD; heptachlor; heptenophos; heterophos; hexachlor (= hexachloran); hexachloroacetone; hexachlorobenzene; hexachlorobutadiene; hexaconazole; hexaflumuron; hexafluoramin; hexaflurate; hexazinone; hexylthiofos; hexythiazox; HHDN; hydramethylnon; hydrogen; cyanide; hydroprene; hydroxyisoxazole; 8-hydroxyquinoline; sulfate; hymexazol; hyquincarb; IBP; imazalil; imazamethabenz; imazamox; imazapic; imazapyr; imazaquin; imazethapyr; imazosulfuron; imibenconazole; imidacloprid; iminoctadine; imiprothrin; indanofan; indoxacarb; iodobonil; iodofenphos; iodosulfuron; ioxynil; ipazine; IPC; ipconazole; iprobenfos; iprodione; iprovalicarb; iprymidam; IPSP; IPX; isamidofos; isazofos; isobenzan; isocarbamid; isocil; isodrin; isofenphos; isomethiozin; isonoruron; isopolinate; isoprocarb; isoprocil; isopropalin; isoprothiolane; isoproturon; isothioate; isouron; isovaledione; isoxaben; isoxachlortole; isoxaflutole; isoxapyrifop; isoxathion; isuron; ivermectin; jasmolin I; jasmolin II; jodfenphos; juvenile; hormone I; juvenile; hormone II; juvenile; hormone III; karbutilate; kasugamycin; kelevan; kinoprene; lactofen; lambda-cyhalothrin; lead arsenate; lenacil; leptophos; lime sulfur; d-limonene; lindane; linuron; lirimfos; lufenuron; lythidathion; M-74; M-81; MAA; malathion; maldison; malonoben; MAMA; mancopper; mancozeb; maneb; mazidox; MCC; MCPA; MCPA-thioethyl; MCPB; 2,4-MCPB; mebenil; mecarbam; mecarbinzid; mecarphon; mecoprop; mecoprop-P; medinoterb; mefenacet; mefluidide; menazon; MEP; mepanipyrim; mephosfolan; mepronil; mercaptodimethur; mercaptophos; mercaptophos-teolovy; mercaptothion; mercuric; chloride; mercuric oxide; mercurous; chloride; mesoprazine; mesosulfuron; mesotrione; mesulfen; mesulfenfos; mesulphen; metalaxyl; metalaxyl-M; metam; metamitron; metaphos; metaxon; metazachlor; metazoxolon; metconazole; metflurazon; methabenzthiazuron; methacrifos; methalpropalin; metham; methamidophos; methasulfocarb; methazole; methfuroxam; methibenzuron; methidathion; methiobencarb; methiocarb; methiuron; methocrotophos; métholcarb; methometon; methomyl; methoprene; methoprotryn; methoprotryne; methoxychlor; 2-methoxyethylmercury; chloride; methoxyfenozide; methyl bromide; methylchloroform; methyldithiocarbamic; acid; methyldymron; methylene; chloride; methyl; isothiocyanate; methyl-mercaptophos; methylmercaptophos; oxide; methyl-mercaptophos-teolovy; methylmercury; benzoate; methylmercury; dicyandiamide; methyl parathion; methyltriazothion; metiram; metobenzuron; metobromuron; metolachlor; S-metolachlor; metolcarb; metosulam; metoxadiazone; metoxuron; metrafenone; metribuzin; metriphonate; metsulfovax; metsulfuron; mevinphos; mexacarbate; milbemectin; milneb; mipafox; MIPC; mirex; MNAF; molinate; monalide; monisouron; monochloroacetic; acid; monocrotophos; monolinuron; monosulfiram; monuron; morfamquat; morphothion; MPMC; MSMA; MTMC; myclobutanil; myclozolin; nabam; naftalofos; naled; naphthalene; naphthalic; anhydride; naphthalophos; naproanilide; napropamide; naptalam; natamycin; neburea; neburon; nendrin; nichlorfos; niclofen; niclosamide; nicobifen; nicosulfuron; nicotine; nifluridide; nikkomycins; NIP; nipyraclofen; nitenpyram; nithiazine; nitralin; nitrapyrin; nitrilacarb; nitrofen; nitrofluorfen; nitrostyrene; nitrothal-isopropyl; nobormide; norbormide; norea; norflurazon; noruron; novaluron; noviflumuron; NPA; nuarimol; OCH; octhilinone; o-dichlorobenzene; ofurace; omethoate; orbencarb; orthobencarb; ortho-dichlorobenzene; oryzalin; ovatron; ovex; oxadiargyl; oxadiazon; oxadixyl; oxamyl; oxapyrazon; oxasulfuron; oxaziclomefone; oxine-copper; oxine-Cu; oxpoconazole; oxycarboxin; oxydemeton-methyl; oxydeprofos; oxydisulfoton; oxyfluorfen; oxythioquinox; PAC; palléthrine; PAP; para-dichlorobenzene; parafluron; paraquat; parathion; parathion-methyl; Paris green; PCNB; PCP; p-dichlorobenzene; pebulate; pédinex; pefurazoate; penconazole; pencycuron; pendimethalin; penfluron; penoxsulam; pentachlorophenol; pentanochlor; pentoxazone; perfluidone; permethrin; pethoxamid; PHC; phénétacarbe; phenisopham; phenkapton; phenmedipham; phenmedipham-ethyl; phenobenzuron; phenothiol; phenothrin; phenthoate; phenylmercuriurea; phenylmercury acetate; phenylmercury chloride; phenylmercury nitrate; phenylmercury salicylate; 2-phenylphenol; phorate; phosalone; phosdiphen; phosfolan; phosmet; phosnichlor; phosphamide; phosphamidon; phosphine; phosphocarb; phoxim; phoxim-methyl; phthalide; phthalophos; phthalthrin; picloram; picolinafen; piperophos; pirimetaphos; pirimicarb; pirimiphos-ethyl; pirimiphosmethyl; PMA; PMP; polycarbamate; polychlorcamphene; polyethoxyquinoline; polyoxins; polyoxorim; potassium arsenite; potassium cyanate; potassium polysulfide; potassium thiocyanate; pp'-DDT (pure); prallethrin; precocene I; precocene II; precocene III; pretilachlor; primidophos; primisulfuron; probenazole; prochloraz; proclonol; procyazine; procymidone; prodiamine; profenofos; profluazol; profluralin; profoxydim; proglinazine; promacyl; promecarb; prometon; prometryn; prometryne; pronamide; propachlor; propafos; propamocarb; propanil; propaphos; propaquizafop; propargite; propazine; propetamphos; propham; propiconazole; propineb; propisochlor; propoxur; propoxycarbazone; propyzamide; prosulfalin; prosulfocarb; prosulfuron; prothidathion; prothiocarb; prothiofos; prothoate; protrifenbute; proxan; prymidophos; prynachlor; pydanon; pyracarbolid; pyraclofos; pyraclonil; pyraflufen; pyrazolate; pyrazolynate; pyrazon; pyrazophos; pyrazosulfuron; pyrazoxyfen; pyresmethrin; pyrethrin I; pyrethrin II; pyrethrins; pyribenzoxim; pyributicarb; pyriclor; pyridaben; pyridafol; pyridaphenthion; pyridate; pyridinitril; pyrifenox; pyriftalid; pyrimétaphos; pyrimethanil; pyrimicarbe; pyrimidifen; pyrimitate; pyriminobac; pyrimiphos-ethyl; pyrimiphos-methyl; pyriproxyfen; pyrithiobac; pyroquilon; pyroxychlor; pyroxyfur; quassia; quinacetol; quinalphos; quinalphos-methyl; quinazamid; quinclorac; quinconazole; quinmerac; quinoclamine; quinomethionate; quinonamid; quinothion; quinoxyfen; quintiofos; quintozene; quizalofop; quizalofop-P; rabenzazole; rafoxanide; reglone; resmethrin; rhodethanil; rimsulfuron; rodéthanil; ronnel; rotenone; ryania; sabadilla; salicylanilide; schradan; sebuthylazine; secbumeton; selamectin; sesone; sethoxydim; sevin; siduron; silafluofen; silthiofam; silvex; simazine; simeconazole; simeton; simetryn; simetryne; SMA; sodium arsenite; sodium chlorate; sodium fluoride; sodium hexafluorosilicate; sodium orthophenylphenoxide; sodium pentachlorophenate; sodium pentachlorophenoxide; sodium o-phenylphenoxide; sodium polysulfide; sodium silicofluoride; disodium tetraborate; sodium thiocyanate; solan; sophamide; spinosad; spirodiclofen; spiroxamine; stirofos; streptomycin; sulcofuron; sulcotrione; sulfallate; sulfentrazone; sulfiram; sulfluramid; sulfometuron; sulfosulfuron; sulfotep; sulfotepp; sulfur; sulfuric acid; sulfuryl fluoride; sulglycapin; sulprofos; sultropen; swep; 2,4,5-T; tau-fluvalinate; tazimcarb; 2,4,5-TB; 2,3,6-TBA; TBTO; TBZ; TCA; TCBA; TCMTB; TCNB; TDE; tebuconazole; tebufenozide; tebufenpyrad; tebupirimfos; tebutam; tebuthiuron; tecloftalam; tecnazene; tecoram; tedion; teflubenzuron; tefluthrin; temephos; TEPP; tepraloxydim; terallethrin; terbacil; terbucarb; terbuchlor; terbufos; terbumeton; terbuthylazine; terbutol; terbutryn; terbutryne; terraclor; tetrachloroethane; tetrachlorvinphos; tetraconazole; tetradifon; tetradisul; tetrafluron; tetramethrin; tetranactin; tetrasul; thenylchlor; theta-cypermethrin; thiabendazole; thiacloprid; thiadiazine; thiadifluor; thiamethoxam; thiameturon; thiazafluron; thiazone; thiazopyr; thicrofos; thicyofen; thidiazimin; thidiazuron; thifensulfuron; thifluzamide; thiobencarb; thiocarboxime; thiochlorfenphim; thiochlorphenphime; thiocyclam; thiodan; thiodicarb; thiofanocarb; thiofanox; thiomersal; thiometon; thionazin; thiophanate; thiophanate-ethyl; thiophanate-methyl; thiophos; thioquinox; thiosultap; thiram; thiuram; thuringiensin; tiabendazole; tiocarbazil; tioclorim; tioxymid; TMTD; tolclofos-methyl; tolylfluanid; tolfenpyrad; tolylmercury acetate; toxaphene; 2,4,5-TP; 2,3,3-TPA; TPN; tralkoxydim; tralomethrin; d-trans-allethrin; transfluthrin; transpermethrin; tri-allate; triadimefon; triadimenol; triallate; triamiphos; triarathene; triarimol; triasulfuron; triazamate; triazbutil; triaziflam; triazophos; triazothion; triazoxide; tribenuron; tributyltin oxide; tricamba; trichlamide; trichlorfon; trichlormetaphos-3; trichloronat; trichloronate; trichlorphon; triclopyr; tricyclazole; tricyclohexyltin; hydroxide; tridemorph; tridiphane; trietazine; trifenofos; trifloxysulfuron; triflumizole; triflumuron; trifluralin; triflusulfuron; trifop; trifopsime; triforine; trimeturon; triphenyltin; triprene; tripropindan; tritac; triticonazole; tritosulfuron; uniconazole; uniconazole-P; validamycin; vamidothion; vaniliprole; vernolate; vinclozolin; XMC; xylachlor; xylenols; xylylcarb; zarilamid; zeta-cypermethrin; zinc naphthenate; zineb; zolaprofos; zoxamide trichlorophenate; 1,2-dichloropropane; 1,3-dichloropropene; 2-methoxyethylmercury chloride; 2-phenylphenol; 2,3,3-TPA; 2,3.6-TBA; 2,4-D; 2,4-DB; 2,4-DEB; 2,4-DEP; 2,4-DP; 2,4-MCPB; 2,4,5-T; 2,4,5-TB; 2,4,5-TP; 3,4-DA; 3,4-DB; 3,4-DP; 4-CPA; 4-CPB; 4-CPP; 8-hydroxyquinoline sulfate;
4-(3-Trifluormethylphenoxy)-2-(4-trifluormethylphenyl)pyrimidin sowie 3-heterocyclyl-substituierte Benzoylderivate der Formel IX 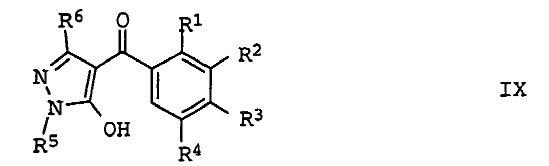
in der die Variablen R¹ bis R⁶ die folgende Bedeutung haben:
R¹, R³ Wasserstoff, Halogen, C₁-C₆-Alkyl, C₁-C₆-Halogenalkyl, C₁-C₆-Alkoxy, C₁-C₆-Halogenalkoxy, C₁-C₆-Alkylthio, C₁-C₆-Alkylsulfinyl oder C₁-C₆-Alkylsulfonyl;
R² ein heterocyclischer Rest ausgewählt aus der Gruppe: Thiazol-2-yl, Thiazol-4-yl, Thiazol-5-yl, Isoxazol-3-yl, Isoxazol-4-yl, Isoxazol-5-yl, 4,5-Dihydroisoxazol-3-yl, 4,5-Dihydroisoxazol-4-yl und 4,5-Dihydroisoxazol-5-yl, wobei die neun genannten Reste gegebenenfalls einfach oder mehrfach durch Halogen, C₁-C₄-Alkyl, C₁-C₄-Alkoxy, C₁-C₄-Halogenalkyl, C₁-C₄-Halogenalkoxy oder C₁-C₄-Alkylthio substituiert sein können;
R⁴ Wasserstoff, Halogen oder C₁-C₆-Alkyl;
R⁵ C₁-C₆-Alkyl ;
R⁶ Wasserstoff oder C₁-C₆-Alkyl.

Die Aufwandmengen liegen bei der Anwendung im Pflanzenschutz je nach klimatischen Bedingungen und Art der phytotoxischen Agrochemikalie und der Pflanze zwischen 0,01 und 2,0 kg Wirkstoff pro ha.

Bei der Saatgutbehandlung werden im allgemeinen Wirkstoffmengen von 0,001 bis 0,1 g, vorzugsweise 0,01 bis 0,05 g je Kilogramm Saatgut benötigt.

Die Verbindungen I können in die für Fungizide üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen im wesentlichen die auch bei Fungiziden Üblichen in Betracht.

Die Formulierungen enthalten im allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% (nach NMR-Spektrum) eingesetzt.

Beispiele für Formulierungen sind aus den eingangs zitierten Schriften bekannt.

Wäßrige Anwendungsformen können üblicherweise aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Herbizide, andere Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Der Hinweis auf die erfindungsgemäße Anwendung der Wirkstoffe I kann als Verpackungsaufdruck oder in Produktdatenblättern erfolgen. Der Hinweis kann auch bei Präparaten erfolgen, die mit den Wirkstoffen I in Kombination angewendet werden können. Anwendungsbeispiele für die Erhöhung der Widerstandskraft der Pflanzen gegen die Phytotoxizität von Agrochemikalien

Die Wirkstoffe wurden getrennt oder gemeinsam als 10%ige Emulsion in einem Gemisch aus 85 Gew.-% Cyclohexanon, 5 Gew.-% Nekanil® LN (Lutensol® AP6, Netzmittel mit Emulgier- und Dispergierwirkung auf der Basis ethoxylierter Alkylphenole) und 10 Gew.-% Wettol® EM (nichtionischer Emulgator auf der Basis von ethoxyliertem Ricinusöl) aufbereitet und entsprechend der gewünschten Konzentration mit Wasser verdünnt.

Anwendungsbeispiel 1: Einfluß von Wirkstoffen und deren Kombinationen auf das Pflanzenwachstum

Reis der Sorte "Koshihikari" wurde in der Saatkiste ausgesät und für 24 Tage unter kontrolliert warmen und feuchten Bedingungen in Klimakammern und im Gewächshaus wachsen gelassen. Zwei Tage vor der Auspflanzung ins Feld wurden die einzelnen Saatkisten mit Wirkstoffaufbereitungen als wäßrige Suspension, die aus einer Stammlösung bestehend aus 10 % Wirkstoff, 85 % Cyclohexanon und 5 % Emulgiermittel angesetzt wurde, in den unten angegebenen Konzentrationen bis zur Tropfnässe besprüht. Anschließend wurden die Saatkisten im Gewächshaus für weitere zwei Tage kultiviert, bis der Reis dann manuell ins Feld zu je 5 Hügeln pro m² ausgepflanzt wurde.

Drei Wochen nach der Behandlung wurden die Reishügel in ihrer Pflanzenhöhe vermessen und mit nicht behandelten Reispflanzen verglichen. Das Ausmaß der Pflanzeneinkürzung ist ein Maß für die pflanzenschädigende Wirkung von Substanzen auf das Wurzelsystem.

Als "phytotoxische Agrochemikalie" wurde in diesem Beispiel der aus WO-A 98/46608 bekannte Wirkstoff [5-Chlor-6-(2,4,6-trifluorphenyl)-[1,2,4]triazolo[1,5-a]pyrimidin-7-yl]-((S)-2,2,2-trifluor-1-methyl-ethyl)-amin (Verbindung A) verwendet.

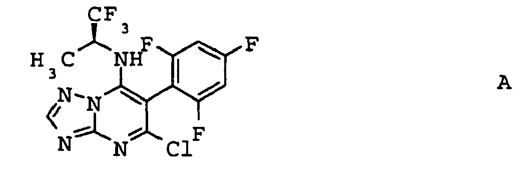

In diesem Versuch zeigten die mit 200 g Wirkstoff A pro Hektar behandelten Reispflanzen eine Einkürzung von 15 %, die mit 400 g Wirkstoff I-16 pro Hektar behandelten Reispflanzen keine Einkürzung und die mit 600 g/ha Wirkstoff I-16 behandelten Reispflanzen eine Einkürzung von 6 %. Die mit 200 g/ha Wirkstoff A und 600 g/ha Wirkstoff I-16 behandelten Pflanzen zeigten eine Einkürzung von nur 6 %, während die mit 200 g/ha Wirkstoff A und 400 g/ha Wirkstoff I-16 behandelten Pflanzen nur noch um 3 % eingekürzt wurden.

Anwendungsbeispiel 2: Einfluß von Wirkstoffen und deren Kombinationen auf die herbizide Aktivität

Als "phytotoxische Agrochemikalien" wurden in diesem Beispiel die aus WO-A 98/31681, bzw. EP-A 723 960 bekannten Wirkstoffe [3-(4,5-Dihydro-isoxazol-3-yl)-4-methansulfonyl-2-methyl-phenyl]-(5-hydroxy-1-methyl-1H-pyrazol-4-yl)-methanon (Verbindung B) und 4-(3-Trifluoromethyl-phenoxy)-2-(4-trifluoromethyl-phenyl)-pyrimidin (Verbindung C) verwendet:

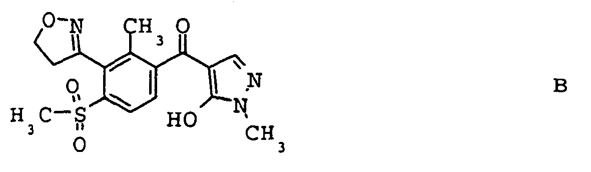

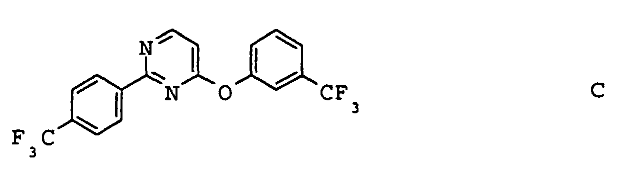

Die Safening-Wirkung der Verbindungen der Formel I auf die Beispielverbindungen B und C konnte in folgendem Versuch gezeigt werden:

Als Kulturgefäße dienten Plastiktöpfe mit lehmigem Sand mit etwa 3,0% Humus als Substrat. Die Samen der Testpflanzen wurden nach Arten getrennt eingesät.

Zur Behandlung wurden die Testpflanzen je nach Wuchsform erst bis zu einer Wuchshöhe von 3 bis 15 cm angezogen und dann mit den in Wasser suspendierten oder emulgierten Wirkstoffen behandelt. Die Testpflanzen wurden als Keimpflanzen getrennt angezogen und einige Tage vor der Behandlung in die Versuchsgefäße verpflanzt.

Die Pflanzen wurden artenspezifisch bei Temperaturen von 10 bis 25°C bzw. 20 bis 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Die Phytotoxizität wurde nach einer Skala von 0 bis 100 bewertet. Dabei bedeutet 100 völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| **Lateinischer Name** | **Deutscher Name** | **Englischer Name** | **Code** |
|---|---|---|---|
| Oryza sativa | Reis | rice | ORYSA |
| Echinochloa crusgalli | Hühnerhirse | barnyardgrass | ECHCG |
| Triticum aestivum | Sommerweizen | spring wheat | TRZAS |
| Chenopodium album | weisser Gänsefuß | pigweed | CHEAL |
| Pharbitis purpurea | Trichterwinde | morningglory | PHBPU |

**Tabelle 2a**

| Herbizide Aktivität im Nachauflaufverfahren | | | | |
|---|---|---|---|---|
| | | Pytotoxizität | | |
| Wirkstoff | Aufwandmenge [kg/ha] | ORYSA | ECHCG | PHBPU |
| B | 0,0039 | 20 | 90 | |
| II-5 + B | 0,125 + 0,0039 | 0 | 90 | |
| C | 0,0156 | 10 | | 98 |
| C | 0,0078 | 10 | | 98 |
| II-5 + C | 0,5 + 0,0156 | 0 | | 98 |
| II-5 + C | 0,25 + 0,0078 | 0 | | 98 |

**Tabelle 2b**

| Herbizide Aktivität im Nachauflaufverfahren | | | | |
|---|---|---|---|---|
| | | Pytotoxizität | | |
| Wirkstoff | Aufwandmenge [kg/ha] | TRZAS | CHEAL | PHBPU |
| C | 0,0313 | 30 | 98 | |
| II-5 + C | 1,0 + 0,0313 | 15 | 98 | |
| C | 0,0156 | 25 | | 98 |
| C | 0,0078 | 20 | | 98 |
| II-5 + C | 0,5 + 0,0156 | 0 | | 98 |
| II-5 + C | 0,25 + 0,0078 | 0 | | 98 |

## Patentansprüche

1. Verfahren zur Erhöhung der Widerstandskraft von Pflanzen gegen die Phytotoxizität anderer Pflanzenschutzmittel, welches **dadurch gekennzeichnet ist, daß** man die Pflanzen, den Boden oder Saatgüter mit einer wirksamen Menge einer Verbindung der Formel I 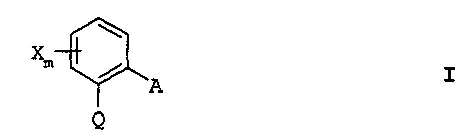 behandelt, worin
X Halogen, C₁-C₄-Alkyl oder Trifluormethyl;
m 0 oder 1;
Q C (=CH-CH₃) -COOCH₃, C (=CH-OCH₃) -COOCH₃, C (=N-OCH₃) -CONHCH₃, C (=N-OCH₃) -COOCH₃, N(-OCH₃)-COOCH₃ oder eine Gruppe Q1 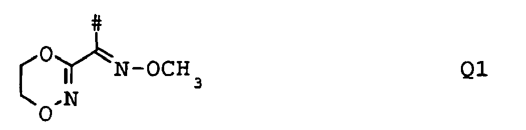 wobei # die Bindung zu dem Phenylring kennzeichnet;
A -O-B, -CH₂O-B, -OCH₂-B, -CH=CH-B, -C≡C-B, -CH₂O-N=C(R¹)-B oder -CH₂O-N=C(R¹)-C (R²)=N-OR³, wobei
B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkyl-oxycarbonyl, C₁-C₆-Alkylthio, C₁-C₆-Alkylamino, Di-C₁-C₆-Alkylamino, C₁-C₆-Alkylaminocarbonyl, Di-C₁-C₆-Alkylaminocarbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5- oder
6-gliedriges Hetaryloxy, C(=NOR')-OR" oder OC(R')₂-C(R")=NOR", wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkyl-sulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5-oder 6-gliedriges Hetaryl, 5- oder 6-gliedriges Hetaryloxy oder C(=NOR')-OR";
R' Wasserstoff, Cyano, C₁-C₆-Alkyl, C₃-C₆-Cycloalkyl oder C₁-C₄-Halogenalkyl;
R" Wasserstoff, C₁-C₆-Alkyl, C₃-C₆-Alkenyl, C₃-C₆-Alkinyl, C₁-C₄-Halogenalkyl, C₃-C₆-Halogenalkenyl oder C₃-C₆-Halogenalkinyl;
R¹ Wasserstoff, Cyano, C₁-C₄-Alkyl, C₁-C₄-Halogenalkyl, C₃-C₆-Cycloalkyl, C₁-C₄-Alkoxy;
R² Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a},
C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R')=NOR", wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy,
C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
R³ Wasserstoff, C₁-C₆-Alkyl, C₂-C₆-Alkenyl, C₂-C₆-Alkinyl, wobei die Kohlenwasserstoffreste dieser Gruppen unsubstituiert oder substituiert sind durch einen bis drei Reste R^{c};
bedeuten, die von den Pflanzen oder Saatgütern aufgenommen wird.

2. Verfahren nach Anspruch 1, wobei in Formel I die Gruppe Q für C(=CH-CH₃) -COOCH₃, C(=CH-OCH₃)-COOCH₃, C(=N-OCH₃)-CONHCH₃, C(=N-OCH₃)-COOCH₃ oder N(-OCH₃)-COOCH₃ steht.

3. Verfahren nach Ansprüchen 1 oder 2, wobei der Index m Null bedeutet und die Substituenten in Formel I folgende Bedeutung haben:
A -O-B, -CH₂O-B, -CH₂O-N=C(R¹)-B oder CH₂-O-N=C(R¹)-C(R²) =N-OR³;
B Phenyl, Pyridyl, Pyrimidinyl, Pyrazolyl, Triazolyl, wobei diese Ringsysteme substituiert sind durch einen oder zwei Reste R^{a};
R¹ Wasserstoff, Cyano, Cyclopropyl, C₁-C₄-Alkyl oder C₁-C₂-Halogenalkyl;
R² C₁-C₄-Alkyl, C₂-C₅-Alkenyl, durch ein oder zwei Halogenatome substituiertes Phenyl oder C(R')=NOR", wobei R' eine der vorstehend bei R¹ genannten Gruppen und R" Wasserstoff, Cyclopropyl oder C₁-C₄-Alkyl und
R³ eine der bei R" genannten Gruppen bedeuten.

4. Verfahren nach Ansprüchen 1 bis 3, wobei ein Wirkstoff der Formel II, 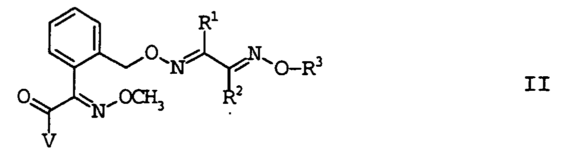 in der V für OCH₃ oder NHCH₃ steht, verwendet wird.

5. Verfahren nach Anspruch 4, wobei ein Wirkstoff der Formel II gemäß Anspruch 4 in der R² für C(R')=NOR" steht und R' und R" jeweils C₁-C₄-Alkyl bedeuten, verwendet wird.

6. Verfahren nach Ansprüchen 1 bis 3, wobei ein Wirkstoff der Formel III, 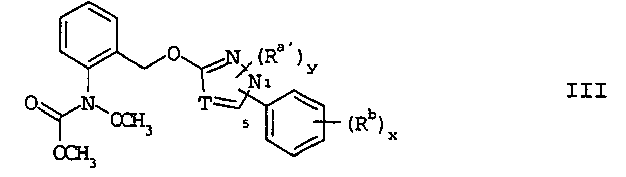 in der T für CH oder N und R^{a}' und R^{b} Halogen oder C₁-C₄-Alkyl bedeuten, die Phenylgruppe in 1- oder 5-Stellung steht und x für 0, 1 oder 2 und y für 0 oder 1 stehen, verwendet wird.

7. Verwendung der Verbindungen der Formel I, II und III gemäß Ansprüchen 1 bis 6 als Safener.

## Claims

1. A method for increasing the resistance of plants to the phytotoxicity of other crop protection products, which comprises treating the plants, the soil or seeds with an effective amount of a compound of the formula I 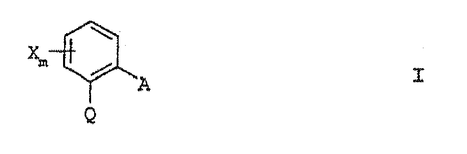 in which
X is halogen, C₁-C₄-alkyl or trifluoromethyl; m is 0 or 1;
Q is C(=CH-CH₃)-COOCH₃, C(=CH-OCH₃)-COOCH₃, C(=N-OCH₃) -CONHCH₃, C(=N-OCH₃)-COOCH₃, N(-OCH₃)-COOCH₃ or a group Q1, 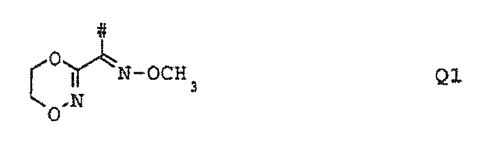 where # indicates the bond to the phenyl ring;
A is -O-B, -CH₂O-B, -OCH₂-B, -CH=CH-B, -C≡C-B, -CH₂O-N=C (R¹) -B or -CH₂O-N=C(R¹)-C(R²)=N-OR³, where
B is phenyl, naphthyl, 5-membered or 6-membered hetaryl or 5-membered or 6-membered heterocyclyl comprising one to three N atoms and/or one O or S atom or one or two O and/or S atoms, the ring systems being unsubstituted or substituted by one to three radicals R^{a}:
R^{a} is cyano, nitro, amino, aminocarbonyl, aminothiocarbonyl, halogen, C₁-C₆-alkyl, C₁-C₆-haloalkyl, C₁-C₆-alkylcarbonyl, C₁-C₆-alkylsulfonyl, C₁-C₆-alkylsulfoxyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkylamino, di-C₁-C₆-alkylamino, C₁-C₅-alkylaminocarbonyl, di-C₁-C₆-alkylaminocarbonyl , C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5- or 6-membered hetaryl, 5- or 6-membered hetaryloxy, C(=NOR')-OR" or OC(R')₂-C(R")=NOR",
the cyclic radicals, in turn, being unsubstituted or substituted by one to three radicals R^{b}:
R^{b} is cyano, nitro, halogen, amino, aminocarbonyl, aminothiocarbonyl, C₁-C₆-alkyl, C₁-C₆-haloalkyl, C₁-C₆-alkylsulfonyl, C₁-C₆-alkylsulfoxyl, C₃-C₆-cycloalkyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered hetaryl, 5- or 6-membered hetaryloxy or C(=NOR')-OR";
R' is hydrogen, cyano, C₁-C₆-alkyl, C₃-C₆-cycloalkyl or C₁-C₄-haloalkyl;
R" is hydrogen, C₁-C₆-alkyl, C₃-C₆-alkenyl, C₃-C₆-alkynyl, C₁-C₄-haloalkyl, C₃-C₆-haloalkenyl or C₃-C₆-haloalkynyl;
R¹ is hydrogen, cyano, C₁-C₄-alkyl, C₁-C₄-haloalkyl, C₃-C₆-cycloalkyl, C₁-C₄-alkoxy;
R² is phenyl, phenylcarbonyl, phenylsulfonyl, 5-or 6-membered hetaryl, 5- or 6-membered hetarylcarbonyl or 5- or 6-membered hetarylsulfonyl, the ring systems being unsubstituted or substituted by one to three radicals R^{a},
C₁-C₁₀-alkyl, C₃-C₆-cycloalkyl, C₂-C₁₀-alkenyl, C₂-C₁₀-alkynyl, C₁-C₁₀-alkylcarbonyl, C₂-C₁₀-alkenylcarbonyl, C₃-C₁₀-alkynylcarbonyl, C₁-C₁₀-alkylsulfonyl or C(R')=NOR", the hydrocarbon radicals of these groups being unsubstituted or substituted by one to three radicals R^{c}:
R^{c} is cyano, nitro, amino, aminocarbonyl, aminothiocarbonyl, halogen, C₁-C₆-alkyl, C₁-C₆-haloalkyl, C₁-C₆-alkylsulfonyl, C₁-C₆-alkylsulfoxyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbanyl, C₁-C₆-alkylaminothiocarbonyl, di-C₁-C₆-alkylaminothiocarbonyl, C₂-C₆-alkenyl, C₂-C₆-alkenyloxy,
C₃-C₆-cycloalkyl, C₃-C₆-cycloalkyloxy, 5-or 6-membered heterocyclyl, 5- or 6-membered heterocyclyloxy, benzyl, benzyloxy, phenyl, phenoxy, phenylthio, 5- or 6-membered hetaryl, 5- or 6-membered hetaryloxy and hetarylthio, it being possible for the cyclic groups, in turn, to be partially or fully halogenated or to have attached to them one to three radicals R^{a}; and
R³ is hydrogen, C₁-C₆-alkyl, C₂-C₆-alkenyl, C₂-C₆-alkynyl, the hydrocarbon radicals of these groups being unsubstituted or substituted by one to three radicals R^{c};
which is taken up by the plants or seeds.

2. The method according to claim 1 wherein, in formula I, the group Q is C(=CH-CH₃)-COOCH₃, C(=CH-OCH₃)-COOCH₃, C(=N-OCH₃)-CONHCH₃, C(=N-OCH₃)-COOCH₃ or N (-OCH₃) -COOCH₃.

3. The method according to claim 1 or 2, wherein the index m is zero and the substituents in formula I have the following meanings:
A is -O-B, -CH₂O-B -CH₂O-N=C(R¹)-B or CH₂-ON=C (R¹) -C(R²)=N-OR³;
B is phenyl, pyridyl, pyrimidinyl, pyrazolyl, triazolyl, these ring systems being substituted by one or two radicals R^{a};
R¹ is hydrogen, cyano, cyclopropyl, C₁-C₄-alkyl or C₁-C₂-haloalkyl;
R² is C₁-C₄-alkyl, C₂-C₅-alkenyl, phenyl which is substituted by one or two halogen atoms, or is C(R')=NOR", where
R' is one of the groups mentioned above under R¹ and
R" is hydrogen, cyclopropyl or C₁-C₄-alkyl, and
R³ is one of the groups mentioned under R".

4. The method according to any of claims 1 to 3, wherein an active ingredient of the formula II 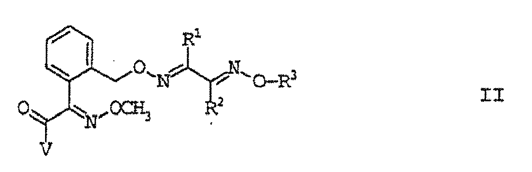 in which V is OCH₃ or NHCH₃ is used.

5. The method according to claim 4, wherein an active ingredient of the formula II according to claim 4 in which R² is C(R')=NOR" and R' and R" are each C₁-C₄-alkyl is used.

6. The method according to any of claims 1 to 3,
wherein an active ingredient of the formula III 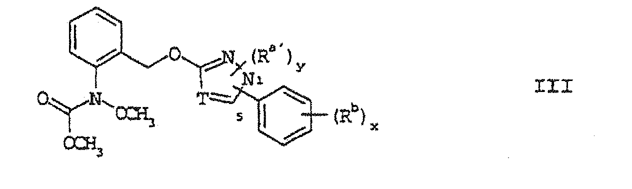 in which T is CH or N and R^{a}' and R^{b} are halogen or C₁-C₄-alkyl, the phenyl group is in the 1- or 5-position and x is 0, 1 or 2 and y is 0 or 1 is used.

7. The use of the compounds of the formula I, II and III according to any of claims 1 to 6 as safeners.

## Revendications

1. Procédé pour accroître la résistance de plantes à la phytotoxicité d'autres produits phytosanitaires, qui est **caractérisé en ce qu'**on traite les plantes, le sol ou les semences par une quantité efficace d'un composé de formule I 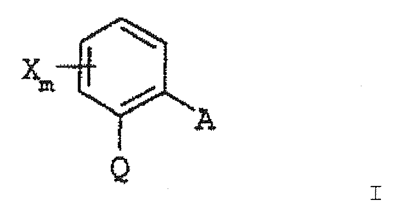 dans laquelle
X représente un atome d'halogène, un groupe alkyle en C₁-C₄ ou trifluorométhyle ;
m est 0 ou 1 ;
Q représente C(=CH-CH₃)-COOCH₃, C(=CH-OCH₃)-COOCH₃, C (=N-OCH₃) -CONHCH₃, C (=N-OCH₃) -COOCH_{3,} N(-OCH₃)-COOCH₃ ou un groupe Q1 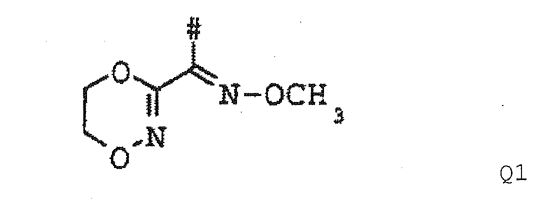 # indiquant la liaison au cycle phényle;
A représente -O-B, -CH₂O-B, -OCH₂-B, -CH=CH-B, -C=C-B, -CH₂O-N=C(R¹) -B ou -CH₂O-N=C(R¹)-C(R²)=N-OR³,
B représentant un groupe phényle, naphtyle, hétéroaryle à 5 chaînons ou 6 chaînons ou hétérocyclyle à 5 chaînons ou 6 chaînons, contenant un à trois atomes d'azote et/ou un atome d'oxygène ou de soufre ou un ou deux atomes d'oxygène et/ou de soufre, le système cyclique étant non substitué ou substitué par un à trois radicaux R^{a}:
R^{a} représentant un groupe cyano, nitro, amino, aminocarbonyle, aminothiocarbonyle, halogéno, alkyle en C₁-C₆, halogénoalkyle en C₁-C₆, alkyl (C₁-C₆) - carbonyle, alkyl (C₁-C₆) sulfonyle, alkyl(C₁-C₆)sulfoxy, cycloalkyle en C₃-C₆, alcoxy en C₁-C₆, halogénoalcoxy en C₁-C₆, alkyl (C₁-C₆) oxycarbonyle, alkyl (C₁-C₆) thio, alkyl (C₁-C₆) amino, dialkyl(C₁-C₆)amino, alkyl (C₁-C₆) aminocarbonyle, dialkyl (C₁-C₆) aminocarbonyle, alkyl(C₁-C₆)aminothiocarbonyle, dialkyl (C₁-C₆) aminothiocarbonyle, alcényle en C₂-C₆, alcényloxy en C₂-C₆, phényle, phénoxy, benzyle, benzyloxy, hétérocyclyle à 5 ou 6 chaînons, hétéroaryle à 5 ou 6 chaînons, hétéroaryloxy à 5 ou 6 chaînons, C(=NOR')-OR'' ou OC(R')₂-C(R'')=NOR'', les radicaux cycliques étant pour leur part non substitués ou substitués par un à trois radicaux R^{b}:
R^{b} représentant un groupe cyano, nitro, halogéno, amino, aminocarbonyle, aminothiocarbonyle, alkyle en C₁-C₆, halogénoalkyle en C₁-C₆, alkyl (C₁-C₆) sulfonyle, alkyl (C₁-C₆) - sulfoxy, cycloalkyle en C₃-C₆, alcoxy en C₁-C₆, halogénoalcoxy en C₁-C₆, alcoxy (C₁-C₆) carbonyle, alkyl (C₁-C₆) thio, alkyl (C₁-C₆) amino, dialkyl (C₁-C₆) amino, alkyl (C₁-C₆) - aminocarbonyle, dialkyl (C₁-C₆)-aminocarbonyle, alkyl (C₁-C₆) - aminothiocarbonyle, dialkyl (C₁-C₆)-aminothiocarbonyle, alcényle en C₂-C₆, alcényloxy en C₂-C₆, cycloalkyle en C₃-C₆, cycloalcényle en C₃-C₆, phényle, phénoxy, phénylthio, benzyle, benzyloxy, hétérocyclyle à 5 ou 6 chaînons, hétéroaryle à 5 ou 6 chaînons, hétéroaryloxy à 5 ou 6 chaînons ou C(=NOR')-OR'';
R' représentant un atome d'hydrogène, un groupe cyano, alkyle en C₁-C₆, cycloalkyle en C₃-C₆ ou halogénoalkyle en C₁-C₄ ;
R" représentant un atome d'hydrogène, un groupe alkyle en C₁-C₆, alcényle en C₃-C₆, alcynyle en C₃-C₆, halogénoalkyle en C₁-C₄, halogèno-alcényle en C₃-C₆ ou halogénoalcynyle en C₃-C₆ ;
R¹ représentant un atome d'hydrogène, un groupe cyano, alkyle en C₁-C₄, halogénoalkyle en C₁-C₄, cycloalkyle en C₃-C₆, alcoxy en C₁-C₄ ;
R² représentant un groupe phényle, phénylcarbonyle, phénylsulfonyle, hétéroaryle à 5 ou 6 chaînons, hétéroarylcarbonyle à 5 ou 6 chaînons ou hétéroarylsulfonyle à 5 ou 6 chaînons, le système cyclique étant non substitué ou substitué par un à trois radicaux R^{a},
alkyle en C₁-C₁₀, cycloalkyle en C₃-C₆, alcényle en C₂-C₁₀, alcynyle en C₂-C₁₀, alkyl (C₁-C₁₀) carbonyle, alcényl (C₂-C₁₀) - carbonyle, alcynyl (C₃-C₁₀) carbonyle, alkyl (C₁-C₁₀) sulfonyle ou C(R')=NOR'', les radicaux hydrocarbonés de ces groupes étant non substitués ou substitués par un à trois radicaux R^{c} :
R^{c} représentant un groupe cyano, nitro, amino, aminocarbonyle, aminothiocarbonyle, halogéno, alkyle en C₁-C₆, halogénoalkyle en C₁-C₆, alkyl (C₁-C₆) sulfonyle, alkyl (C₁-C₆) - sulfoxy, alcoxy en C₁-C₆, halogénoalcoxy en C₁-C₆, alcoxy (C₁-C₆) carbonyle, alkyl (C₁-C₆) thio, alkyl (C₁-C₆) amino, dialkyl (C₁-C₆) amino, alkyl (C₁-C₆) aminocarbonyle, dialkyl (C₁-C₆) aminocarbonyle, alkyl(C₁-C₆)aminothiocarbonyle, dialkyl (C₁-C₆) aminothiocarbonyle, alcényle en C₂-C₆, alcényloxy en C₂-C₆, cycloalkyle en C₃-C₆, cycloalkyloxy en C₃-C₆, hétérocyclyle à 5 ou 6 chaînons, hétérocyclyloxy à 5 ou 6 chaînons, benzyle, benzyloxy, phényle, phénoxy, phénylthio, hétéroaryle à 5 ou 6 chaînons, hétéroaryloxy à 5 ou 6 chaînons et hétéroarylthio, les groupes cycliques pouvant pour leur part être partiellement ou totalement halogénés ou pouvant porter un à trois radicaux R^{a} ; et
R³ représentant un atome d'hydrogène, un groupe, alkyle en C₁-C₆, alcényle en C₂-C₆, alcynyle en C₂-C₆, les radicaux hydrocarbonés de ces groupes pouvant être non substitués ou substitués par un à trois radicaux R^{c};
qui sont acceptés par les plantes ou les semences.

2. Procédé selon la revendication 1, dans lequel, dans la formule I le groupe Q représente C(=CH-CH₃)-COOCH₃, C(=CH-OCH₃)-COOCH₃, C(=N-OCH₃)-CONHCH₃, C(=N-OCH₃)-COOCH₃ ou N- (OCH₃)-COOCH₃.

3. Procédé selon la revendication 1 ou 2, dans lequel l'indice m représente zéro et les substituants dans la formule I ont les significations suivantes :
A représente -O-B, -CH₂O-B, -CH₂O-N=C(R¹)-B ou -CH₂-O-N=C(R¹)-C(R²)=N-OR³;
B représente un groupe phényle, pyridyle, pyrimidinyle, pyrazolyle, triazolyle, ces systèmes cycliques étant non substitués ou substitués par un ou deux radicaux R^{a} ;
R¹ représente un atome d'hydrogène, un groupe cyano, cyclopropyle, alkyle en C₁-C₄ ou halogénoalkyle en C₁-C₂ ;
R² représente un groupe alkyle en C₁-C₄, alcényle en C₂-C₅, phényle substitué par un ou deux atomes d'halogène ou C(R')=NOR'', R' représentant l'un des groupes nommés précédemment pour R¹ et R" représentant un atome d'hydrogène, un groupe cyclopropyle ou alkyle en C₁-C₄ et
R³ représente l'un des groupes nommés pour R''.

4. Procédé selon les revendications 1 à 3, dans lequel on utilise une substance active de formule II 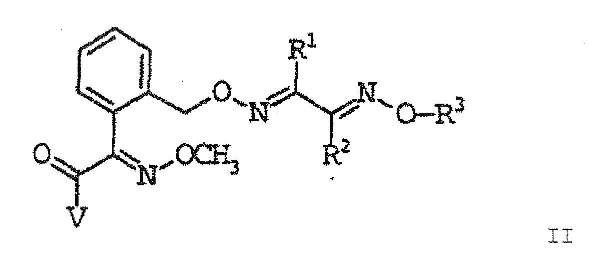 dans laquelle V représente OCH₃ ou NHCH₃.

5. Procédé selon la revendication 4, dans lequel on utilise une substance active de formule II selon la revendication 4, dans laquelle R² représente un groupe C(R') =NOR" et R' et R" représentent chacun un groupe alkyle en C₁-C₄.

6. Procédé selon les revendications 1 à 3, dans lequel on utilise une substance active de formule III, 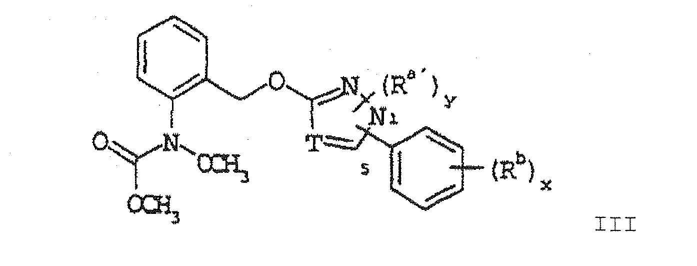 dans laquelle T représente CH ou N et R^{a'} et R^{b} représentent un atome d'halogène ou un groupe alkyle en C₁-C₄, le groupe phényle est en position 1 ou 5 et x représente 0, 1 ou 2 et y représente 0 ou 1.

7. Utilisation des composés de formules I, II et III selon les revendications 1 à 6, en tant que phytoprotecteur *(safener).*
